# EUROPEAN PATENT SPECIFICATION

(11) **EP 3 913 022 B1**
(45) Date of publication and mention of the grant of the patent: **17.01.2024**
(21) Application number: 19910831.7
(22) Date of filing: 26.11.2019
(51) Int. Cl.: C09D 5/00, C09D 5/02, C09D 201/00, B41M 5/00, C09D 7/61

(54) **ANCHOR COAT AGENT**
ANKERBESCHICHTUNGSMITTEL
AGENT DE REVÊTEMENT D'ANCRAGE

(30) Priority: 16.01.2019 JP 2019005311
(43) Date of publication of application: 24.11.2021
(73) Proprietor: Sakata INX Corp., Osaka-shi, Osaka 550-0002 (JP)
(72) Inventor: FUJITA, Atsushi, Osaka-shi, Osaka 550-0002 (JP); ASADA, Naoya, Osaka-shi, Osaka 550-0002 (JP); ITO, Genta, Osaka-shi, Osaka 550-0002 (JP)
(74) Representative: Cabinet Beau de Loménie
(86) International application number: PCT/JP2019/046156
(87) International publication number: WO 2020/149017

(56) References cited:
- WO-A1-2005/000914
- DE-A1-102006 034 239
- JP-A- 2013 530 071
- JP-A- 2013 538 132
- JP-A- 2015 134 914
- JP-A- 2018 051 872
- US-A1- 2009 114 888

## Description

### TECHNICAL FIELD

The present invention relates to anchor coating agents.

### BACKGROUND ART

Flexographic printing has generally been used in the field of packaging containers mainly such as corrugated cardboards.

In recent years, in the field of packaging containers mainly such as corrugated cardboards, the inkjet printing capable of reproducing high-quality designs has drawn attention in terms of an increase in the added value.

For example, Patent Literature 1 discloses a technique relating to a method of producing a printed matter by forming an anchor coat layer from a water-based ink containing an acrylic resin having a predetermined surface tension on a linerboard having been subjected to a water-repellent treatment, and performing printing on the anchor coat layer using a water-based inkjet ink having a predetermined surface tension and a predetermined viscosity.

However, the technique disclosed in Patent Literature 1 can still be improved because the technique does not achieve sufficient storage stability of the anchor coating agent and does not form an anchor coat layer having inkjet printability, coating film durability, and hiding power.

### CITATION LIST

### - Patent Literature

Patent Literature 1: JP 2001-80199 A

### SUMMARY OF INVENTION

### - Technical Problem

The present invention aims to provide an anchor coating agent which is excellent in storage stability and can form an anchor coat layer excellent in inkjet printability, coating film durability, and hiding power.

### - Solution to Problem

As a result of intensive studies for solving the above problems, the inventors have found that an anchor coat layer formed by using an anchor coating agent containing a white pigment, an ionic salt which is a calcium salt and/or magnesium salt, and an aqueous resin having a predetermined acid value can solve all the above problems. Thereby, the inventors have completed the present invention.

In other words, the present invention relates to an anchor coating agent containing a white pigment, an ionic salt which is a calcium salt and/or magnesium salt, and an aqueous acrylic resin having an acid value of 50 mgKOH/g or less.

In the anchor coating agent of the present invention, the white pigment is preferably titanium oxide.

The ionic salt is preferably a dissociable metal salt.

The ionic salt is preferably a calcium salt.

The aqueous resin having an acid value of 50 mgKOH/g or less preferably has a glass transition temperature of 70°C or lower.

The anchor coating agent of the present invention is preferably used for coating a surface of a linerboard or corrugated cardboard.

Hereinafter, the present invention will be described in detail.

The anchor coating agent of the present invention contains a white pigment, an ionic salt which is a calcium salt and/or magnesium salt, and an aqueous acrylic resin having an acid value of 50 mgKOH/g or less.

Examples of the white pigment include inorganic white pigments and organic white pigments.

Examples of the inorganic white pigments include titanium oxide, zinc oxide, cerium oxide, silica, alumina, magnesium oxide, zirconium dioxide, yttria-stabilized zirconium, indium oxide, antimony oxide, tin oxide, barium titanate, barium sulfate, calcium carbonate, silicic acid fine powder, calcium silicate, talc, and clay.

Examples of the organic white pigments include the organic compound salt shown in JP H11-129613 A and the alkylene bismelamine derivative shown in JP H11-140365 A and JP 2001-234093 A.

In particular, titanium oxides in forms such as the rutile form or anatase form are preferred and titanium oxide whose surface is coated with alumina is more preferred in order to suitably achieve hiding power and also achieve storage stability.

The titanium oxide can be subjected to coating by a known method such as an aqueous treatment or a gas phase treatment.

The white pigments may be used alone or in combination of two or more thereof.

Although not limited, the average particle size of the white pigment is preferably 100 to 500 nm, more preferably 150 to 400 nm, in order to suitably achieve storage stability and hiding power.

The average particle size means a volume average particle size measured by a laser diffraction particle size measuring method with a measuring device: Nanotrac (UPA-EX 150 available from Nikkiso Co., Ltd.).

The white pigment is preferably 30 to 80 mass%, more preferably 40 to 70 mass%, based on the total mass of the anchor coating agent in order to suitably achieve hiding power.

Examples of the ionic salt include organic ionic salts and inorganic ionic salts.

Examples of the organic ionic salts include aliphatic sulfonates, higher alcohol sulfates, higher alcohol phosphates, higher alcohol ethylene oxide adduct sulfates, higher alcohol ethylene oxide adduct phosphates, quaternary ammonium salts, and betaine.

Examples of the inorganic ionic salts include alkali metal salts and alkaline earth metal salts. In particular, a dissociable metal salt is preferred in order to suitably achieve inkjet printability.

Examples of the dissociable metal salt include inorganic salts such as chlorides, sulfates, and nitrates of substances, e.g., calcium and magnesium, and organic acid salts such as acetates and formates of substances, e.g., calcium and magnesium. Specific examples thereof include calcium acetate, calcium chloride, calcium formate, calcium nitrate, calcium sulfate, magnesium acetate, magnesium chloride, magnesium formate, magnesium nitrate, and magnesium sulfate.

In particular, calcium salts are more preferred since they have good solubility in a later-described aqueous medium. Calcium chloride or calcium nitrate is still more preferred, and calcium chloride is particularly preferred, in order to more suitably achieve inkjet printability.

The ionic salts can be used alone or in combination of two or more thereof.

In order to suitably achieve inkjet printability, the dissociable metal salt is preferably used in an amount of 3 to 30 mass%, more preferably 3 to 15 mass%, based on the total mass of the anchor coating agent.

Examples of the aqueous resin having an acid value of 50 mgKOH/g or less (hereinafter, also simply referred to as "the aqueous resin") include acrylic resins, polyester resins, polyurethane resins, polyvinyl acetate resins, polyvinyl chloride resins, polystyrene resins, and polybutadiene resins.

In particular, an acrylic resin achieves excellent cohesiveness of the coating film of the anchor coating agent and suitably achieves coating film durability.

The aqueous resins can be used alone or in combination of two or more thereof.

The aqueous acrylic resin has an acid value of 50 mgKOH/g or less.

When the acid value of the aqueous resin exceeds 50 mgKOH/g, an interaction occurs between the ionic salt and the aqueous resin in the anchor coating agent, and the salting effect of the interaction between the white pigment and the ionic salt tends to decrease. Thereby, the inkjet printability decreases. Further, the compatibility with the ionic salt is reduced, and thus storage stability cannot be sufficiently achieved.

The aqueous resin preferably has an acid value of 30 mgKOH/g or less, more preferably 20 mgKOH/g or less in order to suitably achieve storage stability.

The acid value of the aqueous resin can be measured by the potentiometric titration method. The acid value of the aqueous resin can be measured in accordance with JIS K 0070:1992 "Test methods for acid value, saponification value, ester value, iodine value, hydroxyl value and unsaponifiable matter of chemical products", for example. A device used for such potentiometric titration may be an automatic potentiometric titrator AT-610 (available from Kyoto Electronics Manufacturing Co., Ltd.).

The aqueous resin preferably has a glass transition temperature of 70°C or lower, more preferably 40°C or lower in order to suitably achieve storage stability, even more preferably 20°C or lower in order to more suitably achieve coating film durability.

The lower limit of the glass transition temperature of the aqueous resin is preferably -10°C or higher, more preferably 0°C or higher in order to more suitably achieve storage stability.

The glass transition temperature of the aqueous resin can be measured by differential scanning calorimetry (DSC) in accordance with JIS K 7121:2012 "Testing Methods for Transition Temperatures of Plastics", for example.

The aqueous resin is preferably contained as a solids content in an amount of 3 to 20 mass% based on the total mass of the anchor coating agent. When the aqueous resin content is less than 3 mass%, the cohesive force of the coating film of the anchor coating agent may decrease, and thereby the coating film durability may decrease. When the solids content exceeds 20 mass%, the proportions of pigments and other components added decrease, which may cause the effects of the invention to be insufficient.

In order to suitably achieve coating film durability and storage stability, the aqueous resin is preferably contained as a solids content in an amount of 7 to 15 mass% based on the total mass of the anchor coating agent.

Examples of the aqueous resin include those obtained by emulsifying the aqueous resin in a later-described aqueous medium using a low-molecular-weight emulsifier, those obtained by emulsifying the aqueous resin in a later-described aqueous medium using a polymeric emulsifier, and those obtained by emulsifying the aqueous resin in a later-described aqueous medium by self-emulsification.

The aqueous resin is preferably one obtained by emulsifying any of various polymers in an aqueous medium using a low-molecular emulsifier because such an aqueous resin is excellent in miscibility with the ionic salt.

Examples of the low-molecular emulsifier include monosaccharide or polysaccharide fatty acid esters, polyglyceryl fatty acid esters, organic acid monoglycerides, propylene glycol fatty acid esters, polyglyceryl-condensed ricinoleic acid esters, sorbitan fatty acid esters, polyoxyethylene sorbitan fatty acid esters, polyoxyethylene alkyl ethers, alkylbenzene sulfonates, alkane sulfonates, α-olefin sulfonates, polyoxyethylene alkyl ether sulfates, alkyl sulfates, polyoxyethylene alkyl ether phosphates, tetraalkyl ammonium salts, alkyl benzyl dimethyl ammonium salts, fatty acid amidoamines, alkyl pyridinium salts, alkyl betaines, and alkyl amine oxides.

Examples of the aqueous medium include water and a mixture of water and a water-miscible solvent. Examples of the water-miscible solvent include lower alcohols, polyhydric alcohols, and alkyl ethers and alkyl esters thereof. Specific examples thereof include lower alcohols such as methanol, ethanol, n-propanol, isopropanol, butanol, isobutanol, and secondary butanol, polyhydric alcohols such as ethylene glycol, propylene glycol, diethylene glycol, dipropylene glycol, and glycerol, ethylene glycol monomethyl ether, ethylene glycol monoethyl ether, ethylene glycol monoacetate, propylene glycol monomethyl ether, propylene glycol monoethyl ether, propylene glycol monoacetate, diethylene glycol monomethyl ether, and dipropylene glycol monomethyl ether.

In order to suitably achieve fluidity and suitably impart abrasion resistance to the coating film of the anchor coating agent, the aqueous medium is preferably contained in an amount of 1 to 50 mass%, more preferably 2 to 40 mass%, based on the total mass of the anchor coating agent.

The anchor coating agent of the present invention, containing the aqueous medium contained in the aqueous resin, may contain a different aqueous medium.

The different aqueous medium may be the same as the aqueous medium contained in the aqueous resin, but is preferably water in terms of handling safety.

The aqueous medium (the aqueous medium contained in the aqueous resin and the different aqueous medium) contained in the anchor coating agent of the present invention is preferably 10 to 50 mass%, more preferably 20 to 40 mass%, based on the total mass of the anchor coating agent.

The anchor coating agent of the present invention preferably contains a pigment dispersant in order to disperse the white pigment and suitably achieve storage stability.

Examples of the pigment dispersant include carbodiimide dispersants, polyester amine dispersants, fatty acid amine dispersants, polyacrylate dispersants, poly(styrene-maleic acid) dispersants, modified polyurethane dispersants, multi-chain polymer nonionic dispersants, and polymer ion activators.

In particular, a polyacrylate dispersant and a poly(styrene-maleic acid) dispersant are preferred in order to more suitably achieve storage stability.

The pigment dispersants may be used alone or in combination of two or more thereof.

The dispersant contained in the anchor coating agent of the present invention is preferably 1 to 30 mass%, more preferably 2 to 20 mass%, based on the mass of the white pigment.

The anchor coating agent of the present invention preferably contains polyolefin wax in order to suitably impart coating film durability to the coating film of the anchor coating agent.

Examples of the polyolefin wax include waxes produced from an olefin such as ethylene, propylene, or butylene, or from a derivative thereof, and copolymers thereof. Specific examples thereof include polyethylene waxes, polypropylene waxes, and polybutylene waxes.

In particular, polyethylene waxes are preferred in order to more suitably impart coating film durability to the coating film of the anchor coating agent.

The polyolefin wax may be a commercially available one such as Nopcote PEM17 (available from San Nopco Limited), CHEMIPEARL W400, CHEMIPEARL W4005 (available from Mitsui Chemicals, Inc.), AQUACER 515, or AQUACER 593 (available from BYK Japan KK).

The polyolefin wax contained in the anchor coating agent of the present invention is preferably 0.1 to 10 mass%, more preferably 0.2 to 5 mass%, based on the total mass of the anchor coating agent.

The anchor coating agent of the present invention containing the components described above may also contain various appropriately selected additives such as a pigment dispersion aid, a wetting agent, a viscosity adjusting agent, a pH adjusting agent, and a defoaming agent.

The anchor coating agent of the present invention may be produced by any method such as a method including kneading the white pigment, the dispersant, and the aqueous medium, and then further kneading the resulting product with the aqueous resin, the ionic salt, the polyolefin wax, and additives as needed.

The anchor coating agent of the present invention is preferably used for coating a surface of a linerboard or corrugated cardboard.

An anchor coat layer formed by coating with the anchor coating agent is excellent in coating film durability and hiding power.

The linerboard is not limited, and may be, for example, a linerboard obtainable by appropriately mixing one or two or more of chemical pulps, mechanical pulps, and wastepaper pulps. In addition, a linerboard having a multilayer structure obtainable by combining two or more pulp layers can also be used. The corrugated cardboard can be one including the above linerboard.

The anchor coating agent of the present invention can be used for coating by a known printing or coating method, including a printing method such as gravure printing, offset printing, flexographic printing, screen printing, or inkjet printing, or a coating method using a coater such as an air knife coater, blade coater, bar coater, gravure coater, roll coater, roll knife coater, curtain coater, die coater, knife coater, screen coater, mayer bar coater, kiss coater, air doctor coater, rod coater, squeeze coater, reverse roll coater, transfer roll coater, spray coater, or slot orifice coater.

The amount of the anchor coating agent of the present invention for coating is preferably 0.1 to 20 g/m² as a solids content, more preferably 0.1 to 15 g/m² as a solids content in order to suitably achieve coating film durability.

When the amount of the anchor coating agent of the present invention for coating is less than 0.1 g/m², the effect of the present invention may not be sufficiently achieved. When the amount of the anchor coating agent for coating exceeds 20 g/m², back trapping may easily occur, and coating film durability may not be sufficiently achieved.

The coated surface which is coated with the anchor coating agent of the present invention may be dried with a general dryer used in this field, such as a hot air dryer. The coated surface which is coated with the anchor coating agent may be in a completely dried state or a semi-dried state.

A printed matter can be obtained by forming a printed layer by a known printing method using a known ink on an anchor coat layer formed by coating with the anchor coating agent of the present invention.

The known printing method can be one described above for the method for coating with the anchor coating agent. In particular, it is preferred to obtain a printed matter by inkjet printing.

Even when inkjet printing is performed on the anchor coat layer, salting by the ionic salt contained in the anchor coat layer suitably works to cause the components such as a pigment and a binder resin in the ink for inkjet printing to be less penetrable into the linerboard. Thereby, excellent inkjet printability can be achieved and a high-definition printed matter can be obtained.

### - Advantageous Effects of Invention

The present invention can provide an anchor coating agent which is excellent in storage stability and can form an anchor coat layer excellent in ink-jet printability, coating film durability, and hiding power.

### DESCRIPTION OF EMBODIMENTS

Hereinafter, the present invention will be described in more detail with reference to examples, but the present invention is not limited to these examples.

Unless otherwise specified, "%" means "mass%" and "part(s)" means "part(s) by mass".

The raw materials used in the following examples and comparative examples to prepare anchor coating agents are listed below.

### <White pigment>

Titanium oxide (TITANIX JR-809 available from Tayca Corporation, average particle size: 230 nm)

### <Dispersant>

Tego Dispers 750W (available from Evonik, solids content: 40%)

### <Aqueous resin>

Acrylic resin emulsion (P-1) (available from Nippon Carbide Industries Co., Inc., FX2043, acid value: 10 mg KOH/g, glass transition temperature: 10°C, solids content: 50 mass%, aqueous medium: water)

Other acrylic resin emulsions were prepared by the following procedure.

To a mixture of monomers consisting of 1.5 parts by mass of acrylic acid, 68.5 parts by mass of methyl methacrylate, and 30 parts by mass of butyl acrylate were added 3 parts by mass of Aqualon HS-10 (available from DKS Co. Ltd.) as a surfactant and an aqueous solution obtained by dissolving 0.3 parts by mass of potassium persulfate in 46 parts by mass of distilled water. The mixture was emulsified in advance with a stirrer. A polymerization vessel equipped with a stirrer, a condenser, a thermometer, and a nitrogen introduction tube was charged with 20 parts by mass of distilled water and then purged with nitrogen. When the temperature of the vessel was raised to 80°C, the above emulsion of the monomers was added dropwise over three hours and the resulting mixture was further reacted for two hours, whereby the polymerization was completed. Here, a small amount of potassium persulfate was added at the late stage of the polymerization to consume the residual monomers. To the obtained emulsion was added sodium hydroxide to adjust the pH of the emulsion to 7. Thereafter, distilled water was added so that the solids concentration was 50 mass%. Thereby, an acrylic resin emulsion (P-2) (acid value: 10 mg KOH/g, glass transition temperature: 30°C, solids content: 50 mass%, aqueous medium: water) was obtained.

The composition of the monomer mixture in the synthesis of the acrylic resin emulsion (P-2) was changed to a composition containing 1.5 parts by mass of acrylic acid, 89.5 parts by mass of methyl methacrylate, and 9 parts by mass of butyl acrylate to obtain an acrylic resin emulsion (P-3) (acid value: 10 mg KOH/g, glass transition temperature: 70°C, solids content: 50%, aqueous medium: water).

The composition of the monomer mixture in the synthesis of the acrylic resin emulsion (P-2) was changed to a composition containing 1.5 parts by mass of acrylic acid, 40 parts by mass of methyl methacrylate, and 58.5 parts by mass of butyl acrylate to obtain an acrylic resin emulsion (P-4) (acid value: 10 mg KOH/g, glass transition temperature: -10°C, solids content: 50 mass%, aqueous medium: water).

The composition of the monomer mixture in the synthesis of the acrylic resin emulsion (P-2) was changed to a composition containing 4 parts by mass of acrylic acid, 53 parts by mass of methyl methacrylate, and 43 parts by mass of butyl acrylate to obtain an acrylic resin emulsion (P-5) (acid value: 30 mg KOH/g, glass transition temperature: 10°C, solids content: 50 mass%, aqueous medium: water).

The composition of the monomer mixture in the synthesis of the acrylic resin emulsion (P-2) was changed to a composition containing 9.0 parts by mass of acrylic acid, 44.7 parts by mass of methyl methacrylate, and 46.3 parts by mass of butyl acrylate to obtain an acrylic resin emulsion (P-6) (acid value: 70 mg KOH/g, glass transition temperature: 10°C, solids content: 50 mass%, aqueous medium: water).

### <Polyolefin wax>

Polyethylene wax (available from Mitsui Chemicals, Inc., CHEMIPEARL W-400)

### <Ionic salt>

Calcium chloride

### (Example 1)

Titanium oxide, a dispersant, and water in proportions shown in Table 1 were stirred and mixed, followed by kneading using a bead mill according to a common method. The resulting kneaded product was further kneaded with the acrylic resin emulsion (P-1), polyethylene wax, and calcium chloride, so that an anchor coating agent was obtained.

### (Examples 2 to 7 and Comparative Examples 1 to 3)

Anchor coating agents were obtained by the same procedure as in Example 1, except that the formulation was changed to those shown in Table 1.

### (Storage stability evaluation)

The anchor coating agents obtained in Examples 1 to 7 and Comparative Examples 1 to 3 each were stored in an airtight container at 40°C for seven days to determine the presence or absence of viscosity increase, separation, and sedimentation. The anchor coating agent was evaluated by the following criteria.

Excellent: almost no viscosity increase, separation, or sedimentation was observed.

Good: more viscosity increase, separation, and/or sedimentation than Excellent was/were observed.

Acceptable: more viscosity increase, separation, and/or sedimentation than Good was/were observed at levels that caused no operational problems.

Poor: there was difficulty in use due to a large viscosity increase, a large amount of separation, and/or sedimentation.

### <Formation of anchor coat layer>

One surface of a linerboard (K Liner, basis weight 140 g/m², brown liner) was coated with the anchor coating agent obtained in each of Examples 1 to 7 and Comparative Examples 1 to 3 using a hand proofer (165 lines) such that the solids content was 5 g/m². The anchor coating agent was dried with a dryer, whereby an anchor coat layer was formed.

### (Inkjet printability evaluation)

On each of the anchor coat layers formed using the anchor coating agents obtained in Examples 1 to 7 and Comparative Examples 1 to 3 were printed 0.3-mm thin lines by an inkjet printer (available from Seiko Epson Corporation, PX105) using an inkjet ink (available from Seiko Epson Corporation, IC4CL69). Thickening of the lines due to bleeding was visually observed to evaluate the inkjet printability based on the following criteria.

Good: the printing was clear and there was no bleeding.

Acceptable: there was slight bleeding in the printing, but the thickening was not twice or more the original thickness.

Poor: partial bleeding and twice or more thickening were observed in the printing.

Unacceptable: there was difficulty in use because there were many lines with bleeding and twice or more thickening.

### (Coating film resistance evaluation)

Linerboards having the respective anchor coat layers formed using the anchor coating agents obtained in Examples 1 to 7 and Comparative Examples 1 to 3 each were cut to 2.5 cm × 25 cm to obtain a sample piece.

Using a color fastness rubbing tester (available from Tester Sangyo Co., Ltd.), a surface (coated with the anchor coat layer) of the obtained sample piece was rubbed twice with a 200-g weight in a reciprocating manner using as a protective sheet a cotton cloth on which 5 drops of water were dropped.

Thereafter, the surface of the sample piece was visually observed, and the coating film durability was evaluated based on the following criteria.

Excellent: no coating was transferred.

Good: the white pigment slightly adhered to the protective sheet. The white pigment of the anchor coat layer was transferred in a small amount.

Acceptable: the white pigment adhered to the entire surface of the protective sheet. The white pigment of the anchor coat layer was transferred, and part of the linerboard was visible.

Poor: the white pigment adhered strongly to the entire surface of the protective sheet. The white pigment of the anchor coat layer was transferred and most of the linerboard was visible.

### (Hiding power evaluation)

The anchor coat layers formed using the anchor coating agents obtained in Examples 1 to 7 and Comparative Examples 1 to 3 were visually observed, and the hiding power thereof was evaluated based on the following criteria.

Excellent: the coating film was white enough that the underlying linerboard was invisible.

Good: the coating film was white, but the underlying linerboard was not completely covered.

Acceptable: the coating film was a little white, and the brown color of the underlying linerboard was visible.

Poor: the coating film was transparent, and the underlying linerboard was visible therethrough.

**[Table 1]**

| | | Examples | | | | | | | Comparative Examples | | |
|---|---|---|---|---|---|---|---|---|---|---|---|
| | | 1 | 2 | 3 | 4 | 5 | 6 | 7 | 1 | 2 | 3 |
| Titanium oxide (parts by mass) | | 500 | 500 | 50.0 | 50.0 | 50.0 | 50.0 | 50.0 | 500 | 500 | - |
| Dispersant (parts by mass) | | 12.5 | 12.5 | 12.5 | 12.5 | - | 12.5 | 12.5 | 12.5 | 12.5 | - |
| Water (parts by mass) | | 10.5 | 10.5 | 10.5 | 10.5 | 23.0 | 10.5 | 10.5 | 10.5 | 15.5 | 73.0 |
| Acrylic resin emulsion (parts by mass) | P-1 | 200 | - | - | 100 | 20.0 | - | - | - | - | 200 |
| | P-2 | - | 200 | - | - | - | - | - | - | - | - |
| | P-3 | - | - | 200 | - | - | - | - | - | - | - |
| | P-4 | - | - | - | - | - | 200 | - | - | - | - |
| | P-5 | - | - | - | - | - | - | 200 | - | - | - |
| | P-6 | - | - | - | - | - | - | - | 200 | 200 | - |
| Polyethylene-based wax (parts by mass) | | 2.0 | 2.0 | 2.0 | 2.0 | 2.0 | 2.0 | 2.0 | 2.0 | 2.0 | 2.0 |
| Calcium chloride (parts by mass) | | 5.0 | 5.0 | 5.0 | 150 | 5.0 | 5.0 | 5.0 | 50 | - | 50 |
| Total (parts by mass) | | 1000 | 1000 | 1000 | 1000 | 1000 | 1000 | 1000 | 1000 | 1000 | 1000 |
| Storage stability evaluation | | Excellent | Excellent | Good | Good | Acceptable | Good | Good | Poor | Excellent | Excellent |
| Inkjet printability evaluation | | Good | Good | Good | Good | Good | Good | Good | Acceptable | Unacceptable | Good |
| Coating surface resistance | | Excellent | Good | Good | Good | Excellent | Excellent | Excellent | Excellent | Excellent | Excellent |
| Hiding property evaluation | | Excellent | Excellent | Excellent | Excellent | Excellent | Excellent | Excellent | Excellent | Excellent | Poor |

As shown in Table 1, the anchor coating agents of Examples 1 to 7 each were confirmed to be excellent in storage stability and to successfully form an anchor coat layer excellent in inkjet printability, coating film durability, and hiding power.

In particular, in Examples 1, 2, and 7 in which 5 to 15 mass% as a solids content of an aqueous resin having an acid value of 20 mg KOH/g or less and a glass transition temperature of 40°C or lower was used, the anchor coating agent was confirmed to be particularly excellent in storage stability. Also, the anchor coating agent in Example 5 was confirmed to have sufficient storage stability without a dispersant.

In Examples 1 and 5 to 7 in which an aqueous resin having a glass transition temperature of 20°C or lower was used, an anchor coat layer having particularly excellent coating film durability was confirmed to be successfully formed.

In contrast, Comparative Example 1 in which an aqueous resin having a predetermined acid value was not used was inferior in storage stability. Comparative Example 2 in which an ionic salt was not used was inferior in inkjet printability. Comparative Example 3 in which a white pigment was not used was inferior in hiding power.

### INDUSTRIAL APPLICABILITY

The present invention can provide an anchor coating agent which is excellent in storage stability and can form an anchor coat layer excellent in ink-jet printability, coating film durability, and hiding power.

## Claims

1. An anchor coating agent comprising a white pigment, a calcium salt and/or magnesium salt, and an aqueous acrylic resin having an acid value of 50 mg KOH/g or less.

2. The anchor coating agent according to claim 1,
wherein the white pigment is titanium oxide.

3. The anchor coating agent according to claim 1 or claim 2,
wherein the ionic salt is a calcium salt.

4. The anchor coating agent according to any one of claims 1 to 3,
wherein the aqueous resin having an acid value of 50 mg KOH/g or less has a glass transition temperature of 70°C or lower.

5. The anchor coating agent according to any one of claims 1 to 4, further comprising a pigment dispersant.

6. The anchor coating agent according to claim 5,
wherein the pigment dispersant is a poly(styrene-maleic acid) dispersant or a polyacrylate dispersant.

7. The anchor coating agent according to any one of claims 1 to 6, further comprising a polyolefin wax.

8. The anchor coating agent according to claim 7,
wherein the polyolefin wax is a polyethylene wax.

9. Use of the anchor coating agent according to any one of claims 1 to 8 for coating a surface of a linerboard or corrugated cardboard.

10. Method of forming a printed matter on a surface comprising the steps of
- forming an anchor coat layer by coating the surface with the anchor coating agent according to any one of claims 1 to 8; followed by
- forming a printed layer by applying an ink on the anchor coat layer.

11. Method according to claim 10, wherein the anchor coat layer is formed on the surface of a linerboard or corrugated cardboard.

12. Method according to claim 10 or 11, wherein the printed layer is formed by inkjet printing.

## Patentansprüche

1. Ankerbeschichtungsmittel, umfassend ein Weißpigment, ein Calciumsalz und/oder Magnesiumsalz und ein wässriges Acrylharz mit einer Säurezahl von 50 mg KOH/g oder weniger.

2. Ankerbeschichtungsmittel nach Anspruch 1,
wobei das Weißpigment Titanoxid ist.

3. Ankerbeschichtungsmittel nach Anspruch 1 oder Anspruch 2,
wobei das ionische Salz ein Calciumsalz ist.

4. Ankerbeschichtungsmittel nach einem der Ansprüche 1 bis 3,
wobei das wässrige Harz mit einer Säurezahl von 50 mg KOH/g oder weniger eine Glasübergangstemperatur von 70 °C oder weniger aufweist.

5. Ankerbeschichtungsmittel nach einem der Ansprüche 1 bis 4, ferner umfassend ein Pigmentdispergiermittel.

6. Ankerbeschichtungsmittel nach Anspruch 5, wobei das Pigmentdispergiermittel ein Poly(styrol-Maleinsäure)-Dispergiermittel oder ein Polyacrylatdispergiermittel ist.

7. Ankerbeschichtungsmittel nach einem der Ansprüche 1 bis 6, ferner umfassend ein Polyolefinwachs.

8. Ankerbeschichtungsmittel nach Anspruch 7, wobei das Polyolefinwachs ein Polyethylenwachs ist.

9. Verwendung des Ankerbeschichtungsmittels nach einem der Ansprüche 1 bis 8 zum Beschichten einer Oberfläche einer Linerpappe oder Wellpappe.

10. Verfahren zum Bilden eines Druckerzeugnisses auf einer Oberfläche, umfassend die Schritte des
- Bildens einer Ankerbeschichtungsschicht durch Beschichten der Oberfläche mit dem Ankerbeschichtungsmittel nach einem der Ansprüche 1 bis 8; gefolgt von
- Bilden einer bedruckten Schicht durch Aufbringen einer Tinte auf die Ankerbeschichtungsschicht.

11. Verfahren nach Anspruch 10, wobei die Ankerbeschichtungsschicht auf der Oberfläche einer Linerpappe oder Wellpappe gebildet ist.

12. Verfahren nach Anspruch 10 oder 11, wobei die bedruckte Schicht durch Tintenstrahldruck gebildet ist.

## Revendications

1. Agent de revêtement d'ancrage comprenant un pigment blanc, un sel de calcium et/ou un sel de magnésium, et une résine acrylique aqueuse ayant un indice d'acide de 50 mg KOH/g ou moins.

2. Couche de revêtement d'ancrage selon la revendication 1,
dans laquelle le pigment blanc est l'oxyde de titane.

3. Couche de revêtement d'ancrage selon la revendication 1 ou 2,
dans laquelle le sel ionique est un sel de calcium.

4. Couche de revêtement d'ancrage selon l'une quelconque des revendications 1 à 3,
dans laquelle la résine aqueuse ayant un indice d'acide de 50 mg KOH/g ou moins a une température de transition vitreuse de 70 °C ou moins.

5. Couche de revêtement d'ancrage selon l'une quelconque des revendications 1 à 4, comprenant en outre un dispersant de pigment.

6. Couche de revêtement d'ancrage selon la revendication 5, dans laquelle le dispersant de pigment est un dispersant poly(styrène-acide maléique) ou un dispersant polyacrylate.

7. Couche de revêtement d'ancrage selon l'une quelconque des revendications 1 à 6, comprenant en outre une cire de polyoléfine.

8. Couche de revêtement d'ancrage selon la revendication 7, dans laquelle la cire de polyoléfine est une cire de polyéthylène.

9. Utilisation de l'agent de revêtement d'ancrage selon l'une quelconque des revendications 1 à 8 pour revêtir une surface d'un carton doublure ou d'un carton ondulé.

10. Procédé de formation d'une matière imprimée sur une surface, comprenant les étapes de :
- formation d'une couche de revêtement d'ancrage par revêtement de la surface avec l'agent de revêtement d'ancrage selon l'une quelconque des revendications 1 à 8 ; puis
- formation d'une couche imprimée par application d'une encre sur la couche de revêtement d'ancrage.

11. Procédé selon la revendication 10, dans lequel la couche de revêtement d'ancrage est formée sur la surface d'un carton doublure ou d'un carton ondulé.

12. Procédé selon la revendication 10 ou 11, dans lequel la couche imprimée est formée par impression par jet d'encre.
